Europäisches Patentamt

European Patent Office

Office européen des brevets

(11) Veröffentlichungsnummer: **0 199 705 B1**

(12) **EUROPÄISCHE PATENTSCHRIFT**

(19)

(45) Veröffentlichungstag der Patentschrift: **29.01.92**

(21) Anmeldenummer: **86890074.7**

(22) Anmeldetag: **20.03.86**

(51) Int. Cl.⁵: **B23Q 17/20**

(54) Messvorrichtung an Werkzeugmaschinen.

(30) Priorität: **18.04.85 AT 1167/85**

(43) Veröffentlichungstag der Anmeldung:
**29.10.86 Patentblatt 86/44**

(45) Bekanntmachung des Hinweises auf die
Patenterteilung:
**29.01.92 Patentblatt 92/05**

(84) Benannte Vertragsstaaten:
**CH DE FR GB LI**

(56) Entgegenhaltungen:
EP-A- 0 098 044          DE-A- 2 002 525
DE-A- 2 754 732          FR-A- 1 543 269
FR-A- 1 554 119          FR-A- 2 024 635
GB-A- 2 141 546          US-A- 3 191 294
US-A- 3 840 994          US-A- 4 576 069

(73) Patentinhaber: **MASCHINENFABRIK HEID AK-
TIENGESELLSCHAFT**
**Ernstbrunner Strasse 31-33**
**A-2000 Stockerau(AT)**

(72) Erfinder: **Holy, Franz**
**Dr. Adolf Schärf Strasse 3**
**A-2000 Stockerau(AT)**
Erfinder: **Lebersorger, Alfred**
**Beethovengasse 48**
**A-2000 Stockerau(AT)**

(74) Vertreter: **Müllner, Erwin, Dr. et al**
**Patentanwälte Dr. Erwin Müllner Dipl.-Ing.**
**Werner Katschinka Postfach 159 Weihburggasse 9**
**A-1010 Wien(AT)**

## Beschreibung

Die Erfindung betrifft eine Drehmaschine mit einem Planschlitten, dessen Aktionsbereich bei der Drehmitte endet und der eine Tasche für einen Werkzeughalter aufweist, und mit einer Meßvorrichtung mit einem Halter, der im Rahmen einer Werkzeugwechseleinrichtung von einer Warteposition ausgehend der Tasche des Planschlittens zuführbar und der mindestens einen Meßfühler zur Ermittlung des Werkstückdurchmessers mit Hilfe des Wegmeßsystems des Planschlittens aufweist.

Zur Durchführung von Messungen an Werkstücken auf Drehmaschinen wird vielfach das vorhandene Wegmeßsystem für die Werkzeugposition herangezogen und ein Meßfühler auf dem Planschieber bzw. im Rahmen des Werkzeug-Wechselsystems von Drehmaschinen verwendet, der nach Anfahren einer Eichposition gegen das Werkstück fährt. Aus den unmittelbaren Planhüben ermittelt die Numerik den Radius eines nur im Futter eingespannten Werkstückes (Futterteil) oder einer Welle, die auch in der Reitstockspitze gelagert ist (Spitzenteil). Drehmaschinen mit Meßvorrichtungen nach obiger Kennzeichnung sind bekannt. Eine solche auf den Werkstückradius abgestellte Messung (Einpunktmessung) ist unter den heute gestellten Anforderungen oft nicht mehr ausreichend genau, weil der Referenzpunkt in der Eichposition gegenüber dem Meßpunkt einer thermisch bedingten Verlagerung unterworfen ist. Diese Meßfehler können durch eine Zweipunktmessung am Werkstück verhindert werden. Bei einer Zweipunktmessung wird der Durchmesser eines Werkstückes unmittelbar bestimmt. Es werden zwei Punkte des Werkstückes direkt angefahren und über die Numerik aus den Planhüben unmittelbar die Abmessung ermittelt. Die US-PS 3 840 994 zeigt einen Meßarm am Planschlitten, der Teil eines eigenständigen Meßsystems ist und nicht in eine Werkzeugwechseleinrichtung integriert ist. Aus der FR-PS 2 024 635 ist ein Meßfühler zur Bestimmung der Werkzeugposition bekannt, der auf einem Träger angeordnet ist. Der Träger ruht in einer wannenförmigen Ausnehmung eines Schlittens und kann in die Meßposition für das Werkzeug geschwenkt werden. Da der Aktionsbereich der Werkzeuge bei der Bearbeitung lediglich bis zur Drehmitte, gegebenenfalls auch etwas darüber hinaus reicht, ist eine absolute Durchmesserermittlung eines Werkstückes über das Schlittensystem der Drehmaschine bisher meist nur für kleine Durchmesser möglich gewesen. Die Erfindung setzt hier ein und betrifft eine Drehmaschine der eingangs beschriebenen Art mit einer Meßvorrichtung, die eine echte Zweipunktmessung, bei der zwei diametrale Punkte bezüglich der Drehmitte angefahren werden können, für ein genaues Messen, unabhängig von unterschiedlichen thermischen Beeinflussungen, über das Wegmeßsystem des Planschlittens ermöglicht. Dies wird dadurcherreicht, daß der bzw. die Meßfühler auf einem Träger angeordnet sind und der Träger zur Verlagerung des Planhubes in Planrichtung über den Aktionsbereich des Planschlittens hinaus für eine Zweipunkt-Werkstückmessung auf dem Halter in Planrichtung aufklappbar oder ausschiebbar gelagert ist. Damit kann der Meßfühler Positionen erreichen, die außerhalb des unmittelbaren Aktionsbereichs des Planschlittens liegen. Es können diametrale Meßpunkte eines Werkstückes erreicht werden. Die Meßvorrichtung kann wie ein Werkzeug im Spannblock des Planschlittens verwendet werden. Es ist also kein separates Wegemeßsystem erforderlich.

Eine besondere Ausführungsform ist dadurch gekennzeichnet, daß der Träger im Abstand zur Klappachse eine Steuerfläche, beispielsweise einen Stift aufweist und daß an der Magazintasche des Werkzeugmagazins mindestens eine zur Einschubrichtung schrägstehende Führung, beispielsweise eine Nut in seitlichen Wangen der Tasche vorgesehen ist, die beim Einschieben des Halters in die Tasche an der Steuerfläche angreift und den Ausleger in die der Verschiebeebene entsprechende Ruhelage drückt. Damit erfolgt das Ein- und Ausklappen selbsttätig beim Ein- und Ausschieben in bzw. aus dem Magazin. Dabei ist es vorteilhaft, wenn der Träger in Richtung auf seine Gebrauchslage federbeaufschlagt ist. Wenn die Steuerfläche bei ausgeschwenktem Träger an einem Anschlag des Halters anliegt, dann ist die Lage des Trägers in der Meßposition genau definiert. Dieser Anschlag fluchtet mit den seitlichen Führungen in den Wangen der Magazintasche, wodurch ein stetiger Übergang der Steuerfläche in die Führungen beim Einklappen des Trägers ermöglicht wird. Eine besondere Ausführungsform sieht vor, daß im Halter, wie bekannt, ein Kupplungsstück an das Kühlflüssigkeitssystem der Drehmaschine vorgesehen ist, das bei Einschieben des Halters in den Spannblock des Planschiebers auf Druckluft umschaltbar ist und daß Druckluftleitungen längs des Trägers zum Meßfühler zur Reinigung des Werkstückes an der Meßstelle führen. Das Rohrsystem der bei der Bearbeitung erforderlichen Kühlung wird also beim Messen für Druckluft genützt, die im Bereich des Meßfühlers auf das zu messende Werkstück geblasen wird.

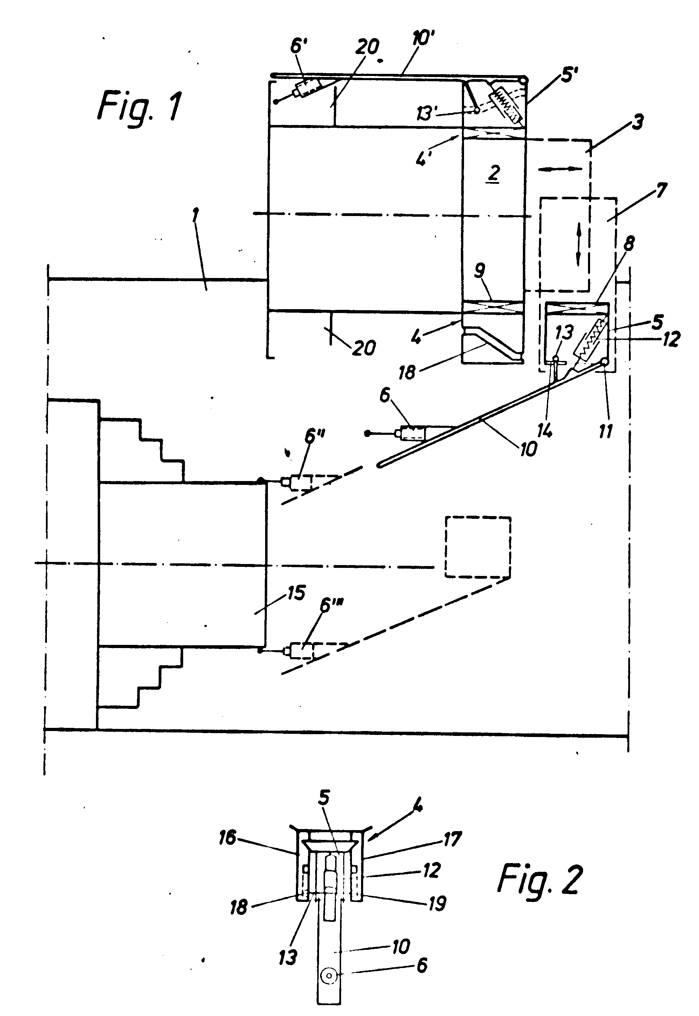

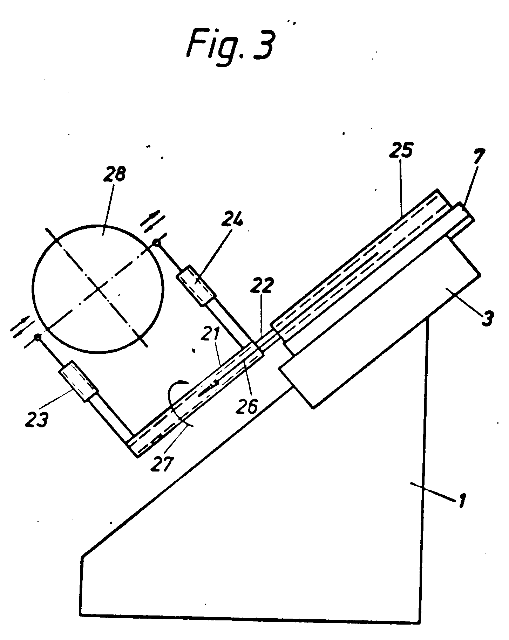

Ausführungsbeispiele des Erfindungsgegenstandes sind in den Zeichnungen dargestellt. Fig. 1 zeigt einen Teil einer Werkzeugmaschine mit Futter, Werkzeugmagazin und einer Meßvorrichtung in schematischer Darstellung und Fig. 2 die Magazintasche sowie den Halter mit Ausleger und Meßfühler nach Fig. 1 in Seitenansicht und Fig. 3 eine schematische Darstellung einer verschieb- und

drehbaren Meßeinrichtung für Wellendurchmesserbestimmung.

Auf einer Schrägbettmaschine 1 ist ein Werkzeugmagazin 2 auf den Bettschlitten 3 mitfahrend angeordnet. Das Werkzeugmagazin 2 ist so eingerichtet, daß neben den Werkzeughaltern in einer der Magazintaschen 4 auch ein Halter 5 ein- und ausgeschoben werden kann, der einen Meßfühler 6 trägt. Ein solcher Halter 5 ist in Fig. 1 in der Wechselposition des Planschlittens 7 dargestellt. Darüberhinaus ist in der diametral liegenden Magazintasche 4' der Halter 5' nochmals in seiner magazinierten Stellung gezeichnet.

Der Halter 5 verfügt über Schwalbenschwanzführungen 8, die in der dargestellten Wechselposition mit den Schwalbenschwanznuten 9 der Magazintasche 4 fluchten. Ein Übergabeschieber ist vorgesehen, jedoch aus Gründen der besseren Übersichtlichkeit nicht dargestellt. Auf dem Halter 5 ist ein Träger 10 um eine Achse 11 drehbar gelagert. Der Träger 10 bildet einen ausschwenkbaren Ausleger und trägt an seinem Ende den Meßfühler 6. Eine Feder 12 drückt den Träger 10 in die ausgeklappte Gebrauchsstellung. Ein Stift 13 des Trägers 10 liegt dabei an einem Anschlag 14 an und begrenzt den Ausklappwinkel des Trägers 10.

Der auf dem Träger 10 montierte Meßfühler 6 kann durch entsprechenden Vorschub der Schlitten 3 und 7 in die Position 6" in Kontakt mit den Werkstück 15 gebracht werden. Aber auch der diametrale Meßpunkt (Fühlerposition 6"') ist erreichbar, obwohl der Aktionsbereich des Planschlittens 7 bereits bei der Drehmitte endet. Über die Numerik wird aus der Differenz der Planvorschübe der Durchmesser des Werkstückes 15 ermittelt.

Wesentliche Voraussetzungen zur klaglosen Funktion eines Werkzeugmagazins 2 ist es, daß der Umschwungdurchmesser durch keines der Werkzeuge überschritten wird. Dieser Grundsatz gilt in gleichem Maße für den Halter 5 mit Träger 10 und Meßfühler 6.

Fig. 1 zeigt, wie der Träger 10 beim Einschieben des Halters 5 in die Tasche 4 automatisch in die Position 10' eingeklappt wird. Dazu sind in den Wangen 16, 17 der Tasche 4 (Fig. 2) zur Einschubrichtung schrägstehende Führungsnuten 18, 19 vorgesehen, in welche der als Steuerfläche wirkende Stift 13 beim Einschieben einlaufen kann. Im Zuge der Einschubbewegung wird der Stift 13 gegen die Kraft der Feder 12 in radialer Richtung nach innen geführt und damit der Träger 10 eingeklappt. An einem mitdrehenden Gehäuseteil des Werkzeugmagazins 2 ist eine Abdeckung 20 vorgesehen, die den Meßfühler 6' sowie den Träger 10' im eingeklappten Zustand aufnimmt. Die Abdeckung 20 ist nach außen durch den als Dekkel wirkenden Träger 10' abgeschlossen. Beim Ausschieben des Halters 5 wird in umgekehrtem Sinn der Träger 10' durch den in den Führungsnuten 18, 19 gleitenden Stift 13 in die Arbeitsposition (10) ausgeklappt. Sobald der Halter 5 im Spannblock des Planschlittens 7 festsitzt, ist die Verbindung zu dem Leitungssystem der Schneidenkühlung hergestellt. Mit dem Befehl zur Entnahme des Meßwerkzeuges aus dem Magazin 2 wird das Kühlmittel abgeschaltet und das Leitungssystem mit Druckluft durchgeblasen. Die Druckluft gelangt über den Halter 5 durch flexible Schläuche bis zum Meßfühler 6, wo sie beispielsweise in einem Düsenkranz um den Fühlerfinger herum in Richtung auf das Werkstück 15 geblasen wird. Dadurch erfolgt eine gründliche Säuberung der Meßpunkte und der Meßfühlerspitze.

Wenn kein Magazin 2 vorhanden ist, dann kann die Meßvorrichtung bestehend aus Halter 5, Träger 10 und Meßfühler 6 auch in einem Werkzeugrevolverkopf anstelle eines Werkzeuges in eine Tasche eingesetzt sein. Zur Messung wird der Revolverkopf so gedreht, daß die Meßvorrichtung dem Werkstück 15 gegenüberliegt. Durch Ausklappen des Trägers 10 mittels einer pneumatischen, hydraulischen, elektrischen Vorrichtung gelangt der Meßfühler 6 unmittelbar an das Werkstück 15. Der Vorschub des Planschlittens 7 (Hub) wird durch den Träger 10 derart verlagert, daß eine Zweipunktmessung (Fühlerposition 6" oder 6"' in Fig. 1) möglich ist.

Die Zweipunktmessung bei Spitzenteilen also beispielsweise Wellen,die im Futter und in einem Reitstockkegel bzw. einer Spitze festgehalten werden, erfolgt gemäß Fig. 3 mittels eines auf dem Planschlitten 7 vorgesehenen Trägers 21, der als Schieber ausgebildet und auf einem Halter 22, in Form einer Achse beweglich, nämlich verschiebbar und drehbar, gelagert ist. Auf dem Träger 21 sind zwei Meßfühler 23 und 24 radial auskragend angeordnet. Der Träger 21 mit den Meßfühlern 23, 24 wird zur Durchführung der Messung aus einem Halter 25 auf dem Planschlitten 7 ausgeschoben (Pfeil 26) und um 90° hochgeklappt (Pfeil 27). Die Fühlerkugeln der Meßfinger der Fühler 23, 24 liegen dann in der planparallelen Mittelebene des Werkstückes 28. Durch Vorschieben des Trägers 21 bis zum Kontakt des Fühlers 24 mit dem Werkstück 28 und durch Einziehen des Trägers 21 bis zum Kontakt des Fühlers 23 mit dem Werkstück 28 ergibt sich ein durch die Numerik der Steuerung der Maschine ermittelbarer Werkstückdurchmesser. Vor der Messung kann einer der Fühler 23 oder 24 bzw. können beide Fühler 23 und 24 in eine Eichposition gefahren werden. Damit können eventuelle Fehler, die aus einer Längendehnung des Trägers 21 resultieren, ausgeglichen werden. Auch bei der Meßvorrichtung nach Fig. 3 wird der Planhub vom Schlitten 3 weg direkt in den Bereich des Werkstückes 28 verlagert.

**Patentansprüche**

1. Drehmaschine mit einem Planschlitten (7), dessen Aktionsbereich bei der Drehmitte endet und der eine Tasche für einen Werkzeughalter aufweist, und mit einer Meßvorrichtung mit einem Halter (5, 5', 25) der im Rahmen einer Werkzeugwechseleinrichtung von einer Warteposition ausgehend der Tasche des Planschlittens (7) zuführbar und der mindestens einen Meßfühler (6, 23, 24) zur Ermittlung des Werkstückdurchmessers mit Hilfe des Wegmeßsystems des Planschlittens (7) aufweist, dadurch gekennzeichnet, daß der bzw. die Meßfühler (6; 23, 24) auf einem Träger (10, 21) angeordnet sind und der Träger zur Verlagerung des Planhubes in Planrichtung über den Aktionsbereich des Planschlittens (7) hinaus für eine Zweipunkt-Werkstückmessung auf dem Halter (5, 25) in Planrichtung aufklappbar oder ausschiebbar gelagert ist.

2. Drehmaschine nach Anspruch 1, dadurch gekennzeichnet, daß der Träger (10) im Abstand zur Klappachse eine Steuerfläche, beispielsweise einen Stift (13) aufweist und daß an der Magazintasche (4) des Werkzeugmagazins (2) mindestens eine zur Einschubrichtung schrägstehende Führung, beispielsweise eine Nut (18, 19) in seitlichen Wangen (16, 17) der Tasche (4) vorgesehen ist, die beim Einschieben des Halters (5) in die Tasche (4) an der Steuerfläche angreift und den Ausleger (10) in die der Verschiebeebene entsprechende Ruhelage (10') drückt.

3. Drehmaschine nach den Ansprüchen 1 oder 2, dadurch gekennzeichnet, daß der Träger (10) in Richtung auf seine ausklappbare Gebrauchslage federbeaufschlagt ist.

4. Drehmaschine nach den Ansprüchen 2 oder 3, dadurch gekennzeichnet, daß die Steuerfläche (Stift 13) bei ausgeschwenktem Träger (10) an einem Anschlag (14) des Halters (5) anliegt.

5. Drehmaschine nach einem der Ansprüche 1 bis 4, dadurch gekennzeichnet, daß im Halter (5), wie bekannt, ein Kupplungsstück an das Kühlflüssigkeitssystem der Drehmaschine vorgesehen ist, das bei Einschieben des Halters in den spannblock des Planschlittens (7) auf Druckluft umschaltbar ist und daß Druckluftleitungen längs des Trägers (10) zum Meßfühler (6) zur Reinigung des Werkstückes (15) sowie der Fühlerkugel bzw. Spitze an der Meßstelle führen.

**Claims**

1. A turning machine with a cross-slide rest (7), the range of action of which ends at the turning centre and which has a pocket for a tool holder, and with a measurement device with a holder (5,5') which is able to be delivered in the frame of a tool changing arrangement from a waiting position starting from the pocket of the cross-slide rest (7) and which has at least one measurement sensor (6, 23, 24) to determine the diameter of the workpiece by means of the odometric system of the cross-slide rest (7), characterised in that the measurement sensor or sensors (6; 23, 24) are arranged on a carrier (10, 21) and the carrier is mounted so as to be able to be flapped open in the transverse direction or so as to be able to be pushed out, for displacement of the transverse stroke in the transverse direction beyond the range of action of the cross-slide rest (7) for a two-point workpiece measurement on the holder (5, 25).

2. A turning machine according to Claim 1, characterised in that the carrier (10) has a control surface, for example a pin (13), at a distance from the hinge axis, and that on the storage pocket (4) of the tool store (2) at least one guide is provided, standing obliquely to the insertion direction, for example a groove (18,19) in lateral cheeks (16, 17) of the pocket (4), which on insertion of the holder (5) into the pocket (4) engages on the control face and presses the arm (10) into the position of rest (10') corresponding to the displacement plane.

3. A turning machine according to Claims 1 or 2, characterised in that the carrier (10) is acted upon elastically in the direction of its position of use which is capable of being swung out.

4. A turning machine according to Claims 2 or 3, characterised in that the control face (pin 13), when the carrier (10) is swung out, rests against a stop (14) of the holder (5).

5. A turning machine according to one of Claims 1 to 4, characterised in that in the holder (5), as is known, a coupling piece is provided on the cooling liquid system of the turning machine, which, on insertion of the holder into the tension block of the cross-slide rest (7), is able to be switched over to compressed air and that compressed air lines lead along the carrier (10) to the measurement sensor (6) to clean the workpiece (15) and also the sensor ball or respectively tip at the measurement site.

## Revendications

1. Tour comprenant un chariot transversal (7) dont la zone d'action se termine au centre de rotation et qui présente une poche pour porte-outils, et comprenant un dispositif de mesure avec un élément porteur (5, 5') susceptible d'être déplacé sur le cadre d'un dispositif de changement d'outils à partir d'une position de repos en sortie de la poche du chariot transversal (7), et qui présente au moins un palpeur de mesure (6, 23, 24) pour déterminer le diamètre de la pièce à usiner à l'aide du système de mesure de distance du chariot transversal, caractérisé en ce que le ou les palpeurs de mesure (6, 23, 24) sont disposés sur un support (10, 21) et en ce que, afin de décaler la course de dressage dans la direction transversale jusqu'au-delà de la zone d'action du chariot transversal (7), le support est monté sur l'élément porteur (5, 25) à pivotement ou à coulissement dans la direction transversale, afin d'assurer une mesure en deux points de la pièce à usiner.

2. Tour selon la revendication 1, caractérisé en ce que le support (10) comporte, espacée de l'axe de pivotement, une surface de guidage, par exemple un goujon (13) et en ce qu'il est prévu sur la poche (4) du magasin d'outils (2) au moins un guidage oblique par rapport à la direction d'introduction, par exemple sous la forme d'une rainure (18, 19), dans des parois latérales (16, 17) de la poche (4), ledit guidage coopérant, lors de l'introduction de l'élément porteur (5), dans la poche (4) avec ladite surface de guidage et poussant le support (10) vers la position de repos (10') qui correspond au plan de déplacement.

3. Tour selon la revendication 1 ou 2, caractérisé en ce que le support (10) est sollicité élastiquement dans la direction de sa position déployée d'utilisation.

4. Tour selon la revendication 2 ou 3, caractérisé en ce que la surface de guidage (goujon 13) est en contact avec une butée (14) de l'élément porteur (5) lorsque le support (10) est en position déployée.

5. Tour selon l'une des revendications 1 à 4, caractérisé en ce que l'élément porteur (5) comporte, d'une manière connue en soi, un élément de raccordement au système de liquide de refroidissement du tour, cet élément de raccordement étant commutable lors de l'introduction de l'élément porteur dans le mandrin de serrage du chariot transversal (7) pour être branché sur une source d'air comprimé, et en ce que des conduites d'air comprimé courent le long du support (10) vers le palpeur de mesure (6) pour assurer le nettoyage de la pièce à usiner (15), et vers la bille ou pointe du palpeur au point de mesure.

EP 0 199 705 B1

Fig. 1

Fig. 2

6

# Fig. 3